# EUROPEAN PATENT SPECIFICATION

(11) **EP 2 310 672 B1**
(45) Date of publication and mention of the grant of the patent: **18.06.2014**
(21) Application number: 09736678.5
(22) Date of filing: 24.07.2009
(51) Int. Cl.: F03D 9/00, F03D 11/00, H02K 7/18

(54) **WIND POWER GENERATOR**
WINDENERGIEGENERATOR
GÉNÉRATEUR D'ÉNERGIE ÉOLIENNE

(30) Priority: 24.07.2008 EE 200800049
(43) Date of publication of application: 20.04.2011
(73) Proprietor: Sõnajalg, Andres, 10140 Tallinn (EE); Sõnajalg, Oleg, 10148 Tallinn (EE)
(72) Inventor: Sõnajalg, Andres, 10140 Tallinn (EE); Sõnajalg, Oleg, 10148 Tallinn (EE)
(74) Representative: Sarap, Margus
(86) International application number: PCT/IB2009/053564
(87) International publication number: WO 2010/010544

(56) References cited:
- EP-A1- 1 780 409
- EP-A2- 1 394 406
- DE-A1- 10 255 745

## Description

### TECHNICAL FIELD

The present invention relates, in general, to equipment for producing and storing wind power, and in particular, to an improved construction of wind turbine.

### DESCRIPTION OF RELATED ART

There are several types of wind turbines, which comprise a base, a tower and a wind turbine fixed to the tower. The earlier wind turbine construction included a turbine connected to blades, a main shaft, a reducer and a generator part with a stator and a rotor. The kinds of generators present the problem of exhaustion caused by the transmission of main shaft-reducer-generator. Furthermore, such structure cannot be used for wind turbines that exceed the capacity of 1,500 kW as the torque generated by the main shaft and reducer becomes too excessive, and the construction suffers from exhaustion and material fatigue, which may result in damage to the structure.

Another known solution of wind turbines is a reducer-free wind turbine produced by a company called Enercon using the inventions of Wobben Aloys, where the tower is connected to a knee-shaped console, which is in turn connected to a main shaft connected to an impeller head that is fixed to a generator part. One such solution has been described in a patent application number EP1794450, filed on June 13th, 2007, where a console with a main shaft, nacelle and rotor, is connected to a tower. The weakness of such a solution lies in the connections of the console and the tower as the wind power acts upon the turbine (blade length 35-40m) is transferred to the connections of the console, which are thus subject to material fatigue and may break. Furthermore, these kinds of wind turbines are also problematic due to insufficient cooling; the air-tightness of the windings in the generator structure should me ensured at the same time. Different solutions have been proposed, but so far the cooling and structural reliability remain problematic. Also, the proposed solutions are expensive and material consuming.

The closest prior art is represented by DE-A-10255745.

### SUMMARY OF INVENTION

The aim of the present invention is to propose such a wind turbine structure, which would enable to:
- improve the balance between the part installed on the wind turbine and the tower;
- separate the generator from the function of the bearing structure, enabling not to direct the forces coming from the turbine to generator details (except for the torque);
- cool the knots and components in the body of the wind turbine effectively;
- to ensure the required air-tightness considering that the wind turbines are mostly positioned in the sea, ocean and on the coast, where in addition to the humidity the wind also carries the particles of mineral salts from the sea water, which in turn cause the premature corrosion of the details, considerable deterioration of the insulation of the generator and electric puncture in the windings.

For that purpose the authors of the invention suggest such a wind turbine structure where the main shaft of the wind turbine is concurrently generator rotor body is a hollow, tubular structure, which is connected from one end to the impeller head with blades. The wind turbine rotor body is supported in the generator body, which is formed of a tube with the help of a bearing or bearings, which have been installed at the centre of the outer surface of the main shaft onto the first part. The bearings can comprise both ball bearings and roller bearings (also inclined roller bearings), for the state-of-the-art technologies enable to make bearing rollers and bearings with any size. At the same time, such structure ensures the air-tightness between wind turbine rotor body and the main frame, simultaneously, the air flows through the wind turbine rotor body, with the help of which necessary knots and components are cooled.

### BRIEF DESCRIPTION OF THE DRAWINGS

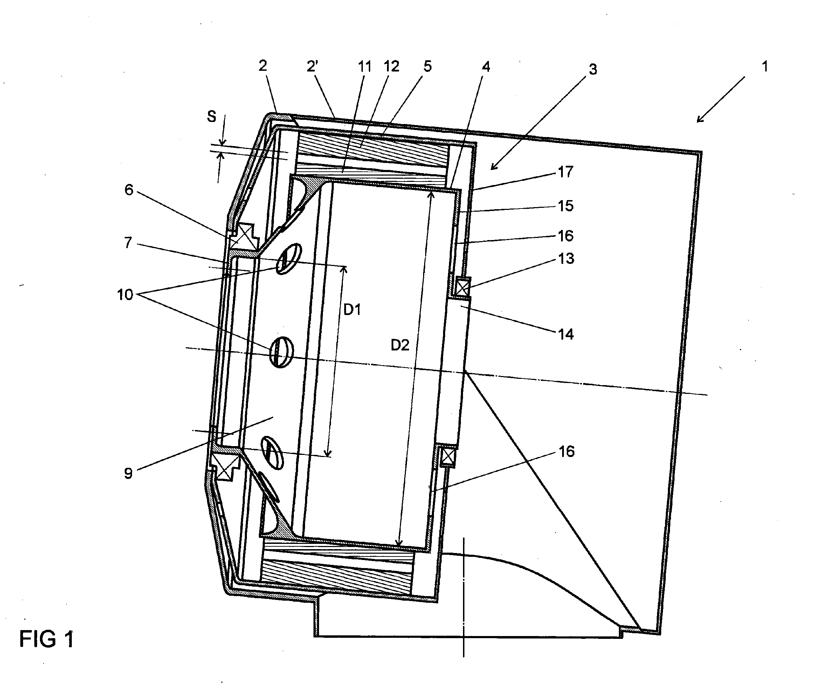

In the following, the invention is described in more detail in reference to the attached drawings, where
Figure 1 shows the cross-section of the wind turbine according to the present invention,

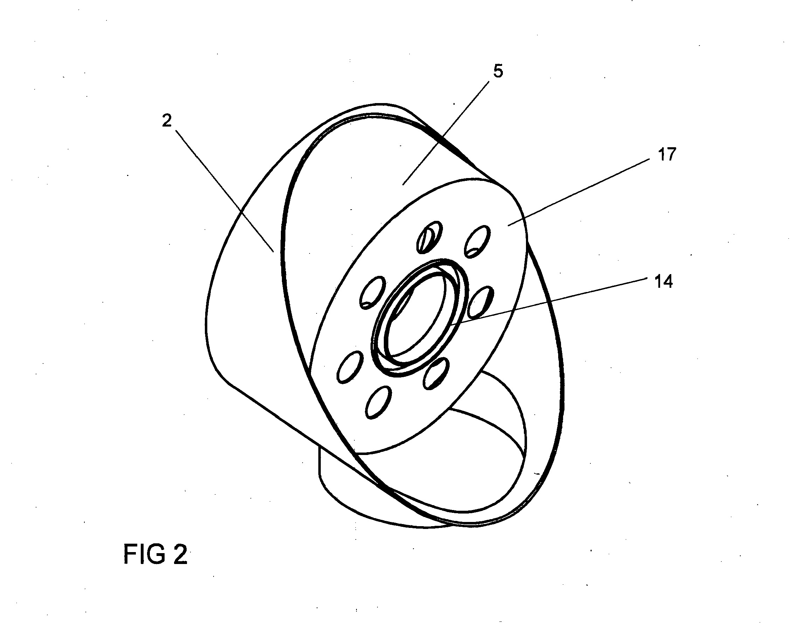

Figure 2 shows the perspective rear view of the generator part and the wind turbine rotor body, whereas the upper part of the body has been removed,

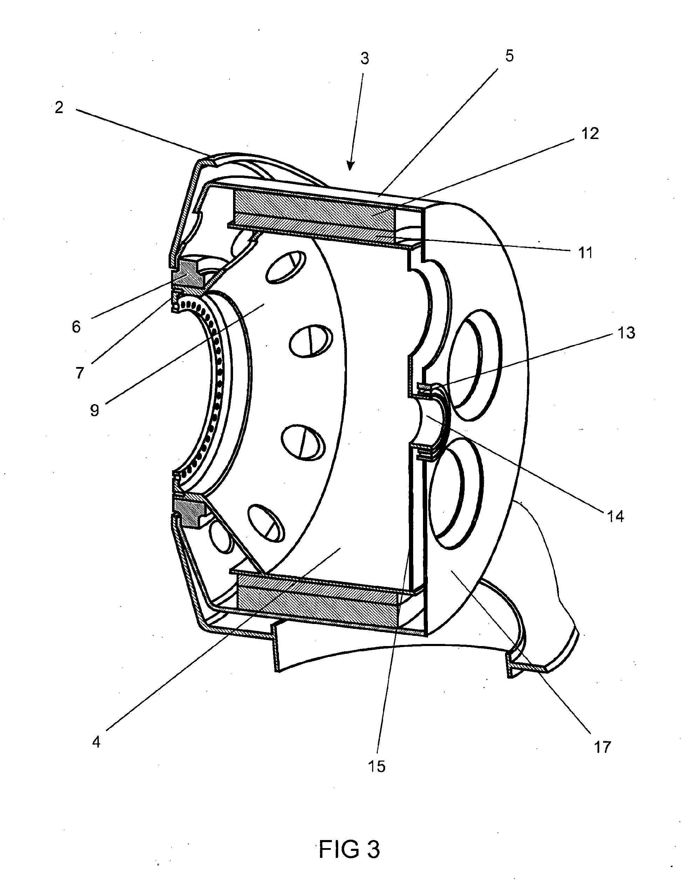

Figure 3 shows the perspective view of the generator part of the wind turbine according to the invention.

### DETAILED DESCRIPTION OF THE INVENTION

The wind turbine 1 depicted in the drawings is via the connections known in the field of the art to the top of the bearing tower, etc. of the wind turbine. Wind turbine 1 comprises main frame 2, 2', which surrounds the generator part 3, or working chamber, an impeller head (not shown in the drawings), which holds the blades of the generator and a connection part (not shown) by which the wind turbine 1 is fixed to the tower, which lies on the ground on a special base (not shown). The interior of the tower has the knots and components arranged and installed, which are necessary for the operation of the wind turbine 1.

Generator part 3 is formed of the wind turbine rotor body 4 and of a stator body 5.

The impeller head is connected to the wind turbine rotor body 4 of the generator part 3 using a connection method known in the field of construction of wind turbines, wherefore this is not explained further hereunder. Furthermore, the impeller blades are fixed to the impeller head applying the solutions known in the state of the art.

The wind turbine rotor body 4 of the wind power generator has been divided into two parts 2, 2' so that the lower part 2 of the main body is joined to the tower and the upper part 2' of the main body is connected to the lower part 2 of the main body at the final stage of the assembly of the wind power generator 1. The use of such a construction for the main body enables to lift the components and knots of the wind power generator in place and assemble them in a quick and easy manner.

The wind turbine rotor body 4 is a hollow cylindrical detail with open ends, which at the end of the impeller head is supported in the main frame 2 via a bearing 6. The bearing could be a double-row conical roller bearing produced by company SKF, which is, first and foremost, meant to operate under heavy loads, and in conditions where composite loads act upon the structure. Furthermore, another type of bearing is used, which is compatible with the conditions arising from the bearing and impacting load.

The internal ring of the bearing 6 surrounds the wind turbine rotor body 4, or the bearing has been fixed to the exterior surface of the wind turbine rotor body 4 with tensioning or to the flanges on the exterior of the wind turbine rotor body 4 with bolts (not shown), in order to ensure the fixed connection between the internal ring of the bearing 6 and the exterior surface of the wind turbine rotor body 4. At the side of the impeller head of the wind turbine rotor body 4 is a flange 7 running towards the inside of the axle of the wind turbine rotor body 4, which has drilled openings for securing devices and which shall hold the impeller head installed in the course of assembly of the wind turbine.

The main frame 2 of the wind turbine has a stator body 5 secured to it, which body surrounds the wind turbine rotor body 4, and which is also connected to the stator windings 12 and the outer ring of the bearing 6. In this way an immobile connection of the outer ring of the bearing 6 and stator body 5 to the main frame 2 is secured.

The wind turbine rotor body 4 depicted in the drawings also includes a conical part 9, which enables to increase the inner diameter D1 to D2 (D2>D1) of the wind turbine rotor body 4. The conical part 9 also has openings 10, through which the air used for cooling can move into stator body 5. Rotor windings or magnets 11 are fixed on to the outer surface of the wind turbine rotor body 4 on the side of stator body 5. On the inner surface of the stator body 5 stator windings 12 are fixed, the width of which corresponds to the width of the rotor windings 11. At the same time, both rotor windings and stator windings could be divided into segments, etc. in a way to facilitate the maintenance and repairs of the wind turbine.

In order to ensure the air gap s between the stator 12 and rotor 11 required for their proper operation, the stator body 5 and the wind turbine rotor body 4 are mutually supported via support bearing 13. Support bearing 13 has been fixed with the inner bearing ring to the support part 14 on the end of the wind turbine rotor body 4. The support part 14 itself is fixed to the end plate 15 located at the rear part of the wind turbine rotor body 4, which is at a distance from the impeller head, being connected to the wind turbine rotor body. The end plate 15 incorporates the openings 16 for cooling air. The support part 14 is located at the centre of the end plate 15 in the axle direction of the wind turbine rotor body 4 and is a cylindrical detail, the outer surface of which holds a connection with the inner ring of the support bearing 13.

The outer ring of the bearing 13 is fixed to stator body 5 via end plate 17 at the end of the stator body 5. The end plates 15, 17 of both the wind turbine rotor body 4 and the stator body 5 may be made as spokes in order to ensure the freer passage for cooling air from the generator part.

The main task of the support bearing 13 is to ensure a permanent gap s between the rotor 11 and the stator 12, which is in turn necessary for the operation of the wind turbine 1.

The advantage of the wind turbine described above is the fact that the centre of gravity of the entire wind turbine 1, mostly that of the rotor 11 and stator 12 could be brought closer to the central axle of the tower, which in turn reduces the load acting on the console structure of the main frame 2, 2'.

The frame of the wind turbine 2, 2' may be fixed to the tower with flange connections, which are not described in further detail hereunder as they are not related to the technical solution presented in the invention.

The specialists of the field understand that the wind power generator construction according to the invention is not limited to the embodiment described above. For example, the length of the wind turbine rotor body could be modified so that the dimension of the entire wind turbine from blades to the rear end of the generator part has taken to a minimum and/or using only one bearing - in such a way the construction is made lighter and its installation and operation easier.

## Claims

1. Wind turbine (1) comprising a tower; a generator (3) comprising a hollow cylindrical wind turbine rotor body (4), a hollow cylindrical main frame of the turbine (2, 2'), which surrounds the generator (3); an impeller head, wherein the rotor body (4) has an outer surface incorporating essentially to the entire width rotor windings or magnets (11), said outer surface being surrounded by a stator body (5) of the generator (3) wherein the wind turbine rotor body (4) on the side of the impeller head is fixed directly to the inner-bearing ring of the bearing (6) which is provided for supporting the wind turbine rotor body (4) to the main frame (2) and the stator body (5) is fixed to the outer ring of the bearing (6) **characterised in that** the main frame (2, 2') of the wind turbine (1) is connected to the stator body (5) only at the impeller head end, and is thus separated by the air gap with the rest of the stator body (5).

2. Wind turbine according to claim 1 **characterised in that** the outer bearing ring of the bearing (6) and the stator body (5) are fixed to the impeller head end of the main frame (2) whereas the stator body (5) is fixed only at the impeller head end to the main frame (2).

3. Wind turbine according to the claim 1 **characterised in that** the inner surface of the stator body (5) has stator windings (12) fixed to an extent that corresponds to the width of rotor windings (11) provided essentially to the entire width on the outer surface of the wind turbine rotor body (4) whereas between the windings of the stator and the rotor (12, 11) there is a fixed air gap S.

4. Wind turbine according to claim 1, **characterised in that** on the other end of the wind turbine rotor body (4) further from the impeller head has an end plate (15), the centre of which has a cylindrical support part (14) directed to the axle of the wind turbine rotor body (4) having the same axle, the outer surface of which incorporates the inner ring of the support bearing (13), and that on the other end of the stator body (5) further from the impeller head has an end plate (17), the centre of which has an opening with a support flange the diameter of which corresponds to the outer diameter of the bearing (13).

5. Wind turbine according to claim 4, **characterised in that** the end plate (17) with the opening integrated is supported to the outer ring of the bearing (13) so that there is a tensioning between the outer surface of the outer ring and the opening in the end plate.

6. Wind turbine according to claims 1-5, **characterised in that** the bearing (6) is a two-row conical roller bearing or a three-row roller bearing.

## Patentansprüche

1. Windturbine (1) bestehend aus einem Mast, einem Generator (3) mit einem hohlen zylindrischen Körper des Windturbinenrotors (4), einem hohlen zylindrischen Hauptrahmen der Turbine (2, 2'), welcher den Generator (3) umgibt, dem Kopf des Antriebrades, wobei das Rotorgehäuse (4) eine Außenfläche aufweist, die hauptsächlich über die gesamte Breite Rotorwicklungen oder Magnete (11) umfasst, wobei die genannte Außenfläche von einem Statorgehäuse (5) des Generators (3) umgeben ist, während das Rotorgehäuse der Windturbine (4) auf der Seite des Antriebsradkopfes direkt mit dem Lagerinnenring des Lagers (6) befestigt ist, das zum Tragen des Rotorgehäuses der Windturbine (4) am Hauptrahmen (2) vorgesehen ist und das Statorgehäuse (5) am Außenring des Lagers (6) befestigt ist, **dadurch gekennzeichnet, dass** der Hauptrahmen (2, 2') der Windturbine (1) nur am Kopfende des Antriebrades mit dem Statorgehäuse (5) verbunden ist, und somit durch den Luftspalt vom Rest des Statorgehäuses (5) getrennt ist.

2. Windturbine gemäß Verfahren nach Anspruch 1, **dadurch gekennzeichnet, dass** der Lageraußenring des Lagers (6) und das Statorgehäuse (5) am Kopfende des Antriebsrades des Hauptrahmens (2) befestigt sind, wobei das Statorgehäuse (5) nur am Kopfende des Antriebsrades am Hauptrahmen (2) befestigt ist.

3. Windturbine gemäß Verfahren nach Anspruch 1, **dadurch gekennzeichnet, dass** die Innenfläche des Statorgehäuses (5) über Statorwicklungen (12) verfügt, die in einem Umfang befestigt sind, welcher der Breite der Rotorwicklungen (11) entspricht, die hauptsächlich über die gesamte Breite der Außenfläche des Rotorgehäuses der Windturbine (4) vorgesehen sind, wobei es zwischen den Wicklungen des Stators und des Rotors (12, 11) einen festen Luftspalt S gibt.

4. Windturbine gemäß Verfahren nach Anspruch 1, **dadurch gekennzeichnet, dass** es am anderen Ende des Rotorgehäuses der Windturbine (4) weiter vom Kopf des Antriebrades eine Abschlussplatte (15) gibt, deren Zentrum ein zylindrisches Trageteil (14) besitzt, das auf die Achse des Rotorgehäuses der Windturbine (4) ausgerichtet ist, welche über dieselbe Achse verfügt, deren Außenfläche den Innenring des Stützlagers (13) umfasst, und dass es am anderen Ende des Statorgehäuses (5) weiter vom Kopf des Antriebrades eine Abschlussplatte (17) gibt, deren Zentrum eine Öffnung mit einem Trägerflansch besitzt, dessen Durchmesser dem Außendurchmesser des Lagers (13) entspricht.

5. Windturbine gemäß Verfahren nach Anspruch 4, **dadurch gekennzeichnet, dass** die Abschlussplatte (17) mit der Öffnung integriert ist, um den Außenring des Lagers (13) abzustützen, so dass es zu einer Spannung zwischen der Außenfläche des Außenrings und der Öffnung in der Abschlussplatte gibt.

6. Windturbine gemäß Verfahren nach Ansprüchen 1-5, **dadurch gekennzeichnet, dass** es sich beim Lager (6) um ein zweireihiges Kegelrollenlager oder ein dreireihiges Rollenlager handelt.

## Revendications

1. L'éolienne (1) comportant une tour, un générateur (3) qui comporte un corps de rotor en forme de cylindre creux (4), un châssis principal en forme de cylindre creux (2, 2') entourant le générateur (3), une tête de pompe, où sur toute la largeur de la surface externe du corps de rotor (4) se trouvent les enroulements du rotor ou les aimants (11) ; ladite surface externe étant entourée par le corps de stator (5) du générateur (3) et la partie du corps de rotor (4) se trouvant du côté de la tête de pompe est directement attachée à l'anneau intérieur du roulement (6) qui unit le corps de rotor (4) de l'éolienne au châssis principal (2), le corps de stator étant attachée à l'anneau extérieur du roulement (6), **caractérisé en ce que** le châssis principal (2, 2') de l'éolienne (1) n'est attachée au corps de stator (5) que par le bout où se trouve la tête de pompe et **en ce que** ledit châssis est par conséquent séparé du reste du corps de rotor (5) par une lame d'air.

2. L'éolienne selon la revendication 1 **caractérisé en ce que** l'anneau extérieur du roulement (6) et le corps de stator (5) sont attachés à la partie du chassis principal (2) où se trouve la tête de pompe, mais le corps de stator (5) n'est attaché que sur ladite partie du chassis principal (2).

3. L'éolienne selon la revendication 1 **caractérisé en ce que** la surface interne du corps de stator (5) comporte les enroulements du stator (12) attachés à une extension dont la largeur correspond à la largeur des enroulements du rotor (11) qui se trouvent sur toute la largeur de la surface externe du corps de rotor (4) de l'éolienne en même temps qu'entre les enroulements du rotor et les enroulements du stator (12, 11), il y a une lame d'air S fixe.

4. L'éolienne selon la revendication 1 **caractérisé en ce que** à l'autre bout du corps de rotor (4) de l'éolienne, en face de la tête de pompe, se trouve la plaque d'extrémité (17) qui comporte au centre une ouverture avec une bride de soutien dont le diamètre extérieur correspond au diamètre extérieur du roulement (13).

5. L'éolienne selon la revendication 4 **caractérisé en ce que** la plaque d'extrémité (17) comportant une ouverture est soutenue par l'anneau extérieur du roulement (13) de la sorte qu'une tension se crée entre la surface externe de l'anneau extérieur et l'ouverture de la plaque d'extrémité.

6. L'éolienne selon les revendications 1 - 5 **caractérisé en ce que** le roulement (6) est un roulement à deux rangées à rouleaux coniques ou bien un roulement à trois rangées à rouleaux coniques.
